# EUROPEAN PATENT SPECIFICATION

(11) **EP 0 391 575 B1**
(45) Date of publication and mention of the grant of the patent: **14.04.1993**
(21) Application number: 90303036.9
(22) Date of filing: 21.03.1990
(51) Int. Cl.: B65G 47/46

(54) **High and low speed automatic sorting conveyor**
Automatischer Hoch- und Niedergeschwindigkeits-Sortierförderer
Convoyeur de triage automatique à vitesse haute et basse

(30) Priority: 07.04.1989 JP 86728/89
(43) Date of publication of application: 10.10.1990
(73) Proprietor: SAGAWA DISTRIBUTION SERVICE CO. LTD., Shinagawa-ku, Tokyo (JP); Suzuki, Shin, Ohta-ku, Tokyo (JP)
(72) Inventor: Suzuki, Shin, Ohta-ku, Tokyo (JP)
(74) Representative: Farwell, William Robert

(56) References cited:
- DE-A- 1 406 839

## Description

This invention generally relates to automatic sorting conveyor systems such as used at commercial distribution and forwarding centres, more particularly this invention concerns conveyor systems of the dump tray type, for sorting articles which may be thin, soft or of undetermined form, size or weight, such as clothing, postal matter, writing materials and magazines see e.g. (DE-A.1406839).

Heretofor, one type of conventional automatic sorting conveyor has conveyors in which the sorting trays for carrying articles are mounted on moving chain conveyors. Also, sorting conveyors in which sorting trays with wheels are connected successively and moved for sorting the articles during the movement are known.

However, with such prior automatic sorting conveyors with sorting trays, in order to sort the articles by tilting the sort trays or opening the bottom of the trays, there exist problems in that the width of the chutes receiving the articles must be large relative to the width of the trays, to enable the sorting conveyor to operate at speed. Thus the space taken up by the sorting zones is greater than necessary, and the distribution of the articles to the chutes is inaccurate and uncertain. Because the speed of such sorting conveyors is limited, a large number of sorting trays relative to the number of sort output paths is also required.

Furthermore, during the supply of the articles to be sorted to the sorting conveyor, there are also other problems in that the direct manual or automatic supply of the articles to the sorting trays moved at high speed is difficult, normally requiring the attachment of special supply devices and entailing excessive complexity and expense.

With such problems in mind, an automatic sorting conveyor system is provided, characterised in that sorting trays are driven to move on an endless path between high and low speeds, the sorting trays moving at the high speed between sorting stations for sorting articles and at the low speed while at the sorting stations.

By alternately switching the speed of each tray between high and low speeds the area of the sorting zones and the number of trays relative to the number of sort output paths as well as the set up space required can be reduced. Further, as no means for supplying the articles are required because the articles can be supplied directly and easily to the sorting trays at the low speed, the conveyor can be simply constructed at a low cost.

Preferably, the sorting trays are adapted to open at the bottom and a wheel supporting the bottom of each sorting tray is adapted to run along a support rail, said support wheel falling into a break in said support rail opened by a sorting operation device when a given tray arrives at a desired sorting position thus opening the bottom of the sorting tray to carry out the sorting of the article. The sorting operation device may include a part of the support rail which is movable to open and close a gap therein. For example the movable part may be pivotably mounted to the remainder of the support rail by a hinge shaft connected to a rotary solenoid for opening and closing the gap. This arrangement ensures that the tray bottoms are opened at the correct location along the endless path when desired.

The sorting trays may be provided with driving wheels supported on pivotable brackets mounted to the trays. In this arrangement a rotary drive shaft extends in parallel with the running direction of the trays and is engageable with the driving wheels for moving the trays, and means are provided for pivoting said brackets and causing the drive wheels and drive shaft to move the trays at different speeds. The means for pivoting the brackets preferably comprise a speed changing arm extending from each bracket and a speed change guide rail having a number of protruding guide portions spaced apart from each other and capable of engaging the arms for pivoting the brackets. This provides a particularly simple and effective arrangement whereby the speed of the trays may be smoothly and continuously varied between the high and low values, whilst the drive shaft need only be coupled to a substantially constant speed motor.

The trays may be connected, for example by hinges, end-to-end to form an endless conveyor moved along a horizontal closed track, with each sorting tray having bottom plates pivotably supported along front and rear edges of main frame bodies thereof and adapted to open and close at a central portion of the bottom, and sorting operation devices, e.g. of the above mentioned type, for opening the bottoms of the sorting trays at desired sorting positions, together with means for closing opened bottoms of the sorting trays being disposed at appropriate positions along the track. Each tray body preferably is provided with a running wheel which in use is supported by a running rail of said track, a supporting wheel being mounted on one of said bottom plates and adapted to run along a supporting rail of said track, the one bottom plate being adapted to support the other bottom plate in the closed condition. The other of the bottom plates may similarly be provided with a supporting wheel, the supporting wheels being engageable with a closing guide for the front bottom plate and a closing guide for the rear bottom plate.

Other objects, features and advantages of the present invention will be apparent from the following description made with reference to the drawings.

Figs.1 to 6 of the drawings show one illustrative embodiment of a sorting conveyor system according to the present invention where:-
Fig. 1 is a diagrammatic view of a sorting apparatus;
Fig. 2 is an enlarged partially diagrammatic view of a sorting tray;
Fig. 3 is an end view of a sorting tray;
Figs. 4 and 5 are plan views of a driving means at high and low speeds;
Fig. 6 is a perspective view of a closing means for closing a bottom plate of a tray; and
Fig. 7 is an enlarged partially perspective view of a sorting operation device.

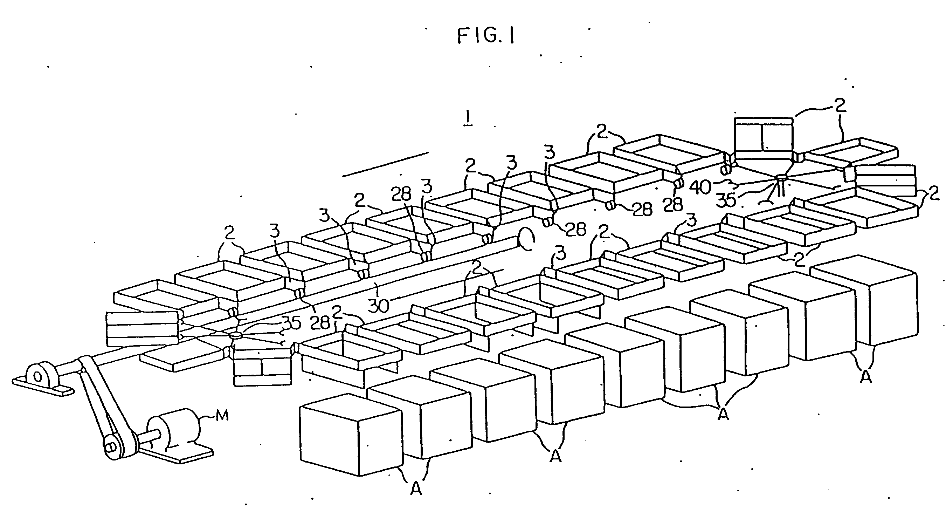

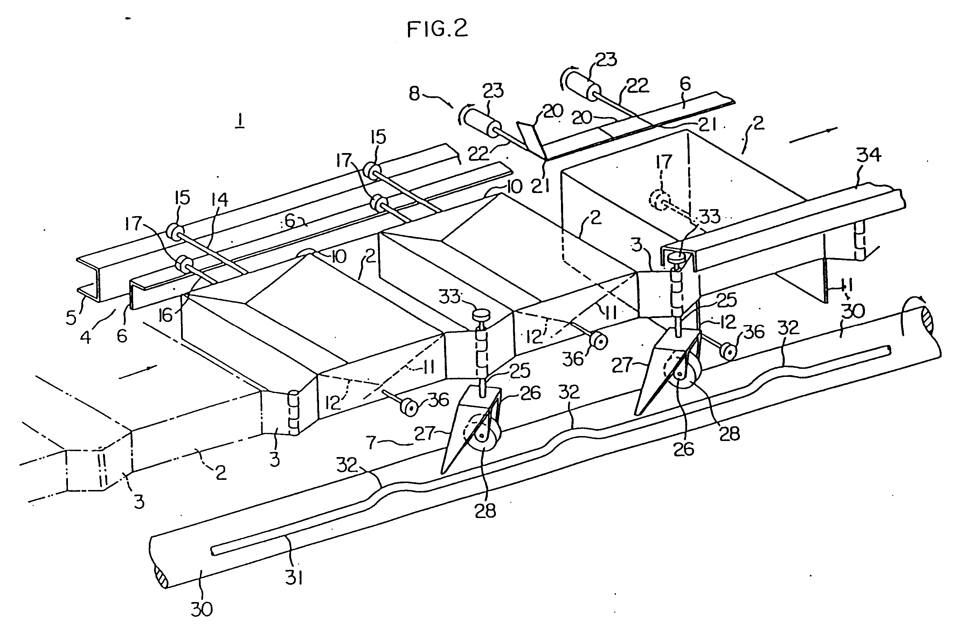

As shown in Fig. 1 and Fig. 2 of the drawings, a high and low speed automatic sorting conveyor for carrying out a method of high and low speed automatic sorting substantially consists of an endless conveyor 1 including a plurality of sorting trays 2 connected by hinges 3 at one end, for example at their inner ends, and capable of running along a horizontal closed track 4 formed with a running rail 5 and a supporting rail 6 of suitably shaped steel such as channel steel or angle steel, a driving apparatus 7 for speed changing and driving the sorting trays 2 of the endless conveyor 1 at the high and low speeds, and a sorting operation device 8 for causing unloading of each of the sorting trays 2 at their desired positions.

As clearly shown in Figs. 2,6 and 7, each of the sorting trays 2 has two bottom plates 11, 12 pivotably supported along their front and rear edges by a frame member 10 and adapted to open and close therein. Each tray is also provided with a running wheel 15 at an end of a supporting shaft 14 horizontally extending from a substantially central portion of the outer side of each frame member 10 that is capable of supporting the frame member 10, and a supporting wheel 17 at an end of a supporting shaft 16 outwardly extending from the front end of the bottom plate 11 at the front side, and thus both wheels 15 and 16 are capable of rotating respectively on the running rail 5 and the supporting rail 6. During closing of the bottom portion of the sorting tray the rear bottom plate 12 is closed and then the front bottom plate 11 is closed to support it. The supporting wheel 17 mounted on the bottom plate 11 therefore supports both bottom plates 11 and 12 in a closed condition while the wheel 17 runs along the supporting rail 6.

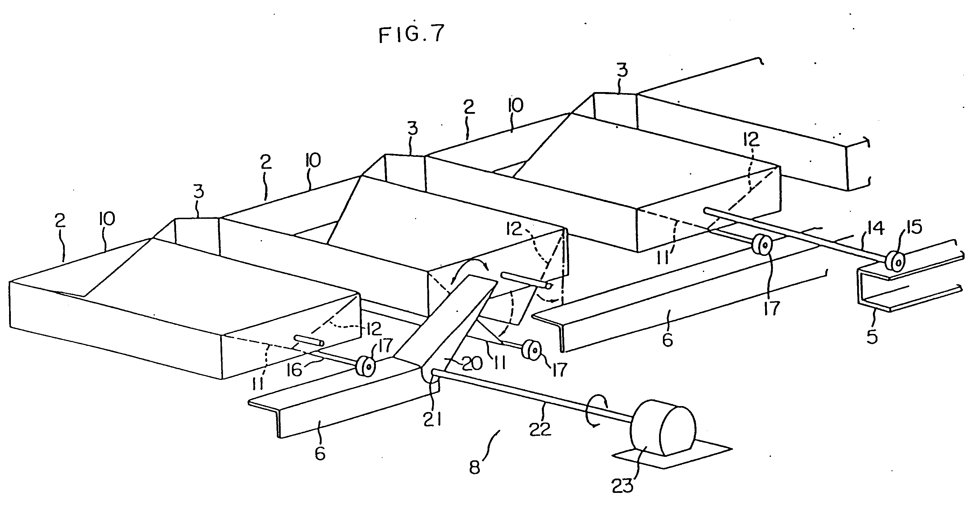

Furthermore, as shown in Fig. 7, sorting operation devices 8 are provided at each sorting station on the supporting rail 6. Such sorting operation devices 8 comprise a movable plate 20 made as a part of and pivotably supported on the support rail 6, and a rotary solenoid 23 connected to a shaft 22 extending from a hinge shaft 21 of the movable plate 20 for opening and closing the movable plate 20. Thus, the support wheel 17 mounted on the end of the front bottom plate 11 can run on the support rail 6 while supporting the bottom plate 11 together with the bottom plate 12 in a closed condition. When a sorting signal is supplied to the sorting operation device 8, the rotary solenoid 23 is energised to rotate the movable sorting plate 20 upward around the shaft 22 to form a space or gap in the support rail 6 as illustrated in Figure 7. Therefore, the support wheel 17 running on the support rail 6 falls into this space to open the front bottom plate 11, at the same time releasing the rear bottom plate 12 to rotate downward to open the whole bottom and thereby carrying out the sorting of the article by allowing the article on the sorting tray 2 to fall.

Furthermore, each of the sorting trays 2 are mutually connected at their front and rear ends to adjacent sorting frame members 10 by hinges 3. The hinge shaft 25 of this hinge 3 extends downwardly and is provided with a driving wheel 28 rotatably mounted in a pivotable bracket 26 provided with a horizontally extending speed changing arm 27. The driving wheel 28 rests on a rotary drive shaft 30 extending in parallel to the running direction of the conveyor to receive driving power from the rotating shaft 30 and to support the sorting tray 2. Thus, the rotational motion of the drive shaft 30 is divided into a component moving the wheel 28 and bracket axially of shaft 30 and a component rotating the wheel 28. The relative magnitude of these components is based on the angle of the rotational axis of the driving wheel 28 to the axis of the driving shaft 30, and the sorting tray 2 is adapted to be driven by the axial component. In order to change automatically the angle of the driving wheel 28 relative to the drive shaft 30 a speed change guide rail 31 engaged with the speed change arm 27 is provided in parallel with the drive shaft 30. The speed change guide rail 31 has protruding guide portions 32 spaced at desired positions causing driving of the driving wheel 28 at the lower speed when the speed change arm 27 is engaged therewith.

Therefore, it will be seen that when the driving wheel 28 rides on the rotating driving shaft 30 to make the maximum angle preferably of approximately 45. therewith, the greatest axial speed is produced, that is to move the trays at high speed, and as the angle is decreased speed is also reduced and finally when the angle is zero, speed becomes zero. The driving shaft 30 can be rotated and driven at a desired speed through a suitable gear or belt type reduction device by a prime mover such as an electric motor M (Fig.1).

In the sorting conveyor system of this embodiment, by using such a principle, the driving wheel 28 is held by a spring (not shown) to normally form an angle of preferably 45° and is moved so that the speed change arm 27 of the bracket 26 for the wheel 28 engages with the protruded guide portion 32 of the guide rail 31 on the lower speed range, so that the direction of the speed change arm 27 is changed as it moves along by the protruded guide portion 32 of the speed change guide rail 31 to change the direction of the drive wheel 28 from the angle of 45° to approximately 0° relative to the drive shaft 30, and thereby the speed of the sorting tray 2 propelled by the driving wheel 28 is automatically changed from the highest speed shown with the maximum angle of 45° for the driving wheel 28 down to the lowest speed shown with an angle of approximately 0° for the driving wheel 28. After the speed change arm 27 passes over the protruded guide portion 32 of the guide rail 31, the angle of the driving wheel 28 returns back to 45° to change its speed to the highest speed. A guide roller 33 is provided on the extension above the hinge shaft 25 of the hinge 3 connecting the sorting trays 2 to guide it along the guide rail 34 and thereby the driving wheel 28 is held to normally position the contact point of the driving wheel 28 and the driving shaft 30 above the central axis of the driving shaft 30 without allowing the driving wheel 28 to deviate from this position.

The endless conveyor includes two 180° rotary portions which are provided with rotary supporting devices 35 each including a plurality of radial arms 40. End portions of the radial arms 40 can engage and support the hinge shafts 25 of the hinges 3, for guiding and supporting the inner ends of the support trays along a semicircular path.

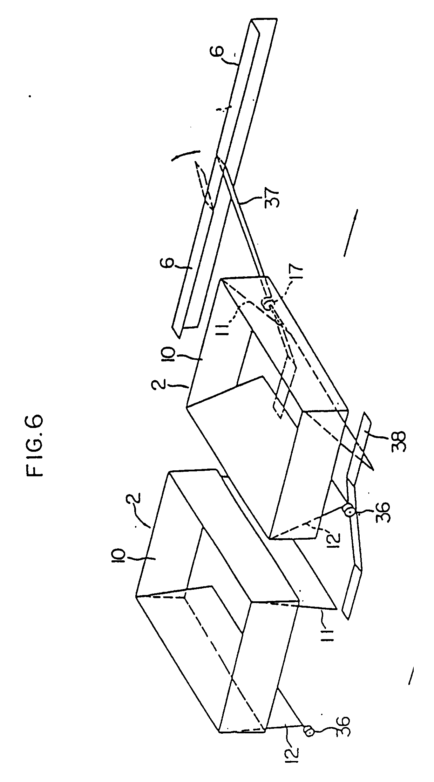

Furthermore, a closing device 9 (Fig.6) for closing the bottom plates 11,12 is provided for example adjacent the terminal portion of the sorting positions to close the opened bottom plates 11,12. This closing device 9 consists of a closing guide 37 for the front bottom plate 11 of the sorting tray 2 and a closing guide 38 for the rear bottom plate 12, bottom plate 12 at the inner side of the sorting tray 2 is provided with a supporting wheel 36. The closing guides 37 and 38 are capable of raising the supporting wheels 17 and 36 respectively for closing the bottom plates 11 and 12. That is, the supporting wheel 36 of the rear bottom plate 12 is first raised up the inclined closing guide 38 to push up the rear bottom plate 12 toward the closing position, and at substantially the same time, although with a slight delay, the supporting wheel 17 of the front bottom plate 11 is gradually raised up the closing guide 37 to push up the bottom plate 11 toward the closed position, closing both bottom plate 12 and then 11 successively.

Thus, in accordance with the automatic sorting conveyor system of the present invention constructed as above, the sorting trays 2 connected in the conveyor are operationally driven by the rotating driving shaft 30 through the driving wheels 28 at both high and low speeds. The running wheel 15 for each of the sorting trays 2 runs on the running rail 5 of the horizontal closed track 4 and the supporting wheel 17 runs on the supporting rail 6, as the rear bottom plate 12 is closed together with the front bottom plate 11 having the supporting wheel 17 running on the supporting rail 6, and thus the article to be sorted can be automatically or manually supplied to and loaded directly on the tray 2 at the article supply station without using specific supplying devices such as chutes or hoppers. At the article supplying station, the necessary article information is input into an electric control apparatus such as a computer by a preliminary reading of a suitable presentation such as a bar code attached to the article with a suitable electric reading device (not shown) and thus the rotary solenoid 23 of the sorting operation device 8 at the desired position can be operated at the necessary operative time.

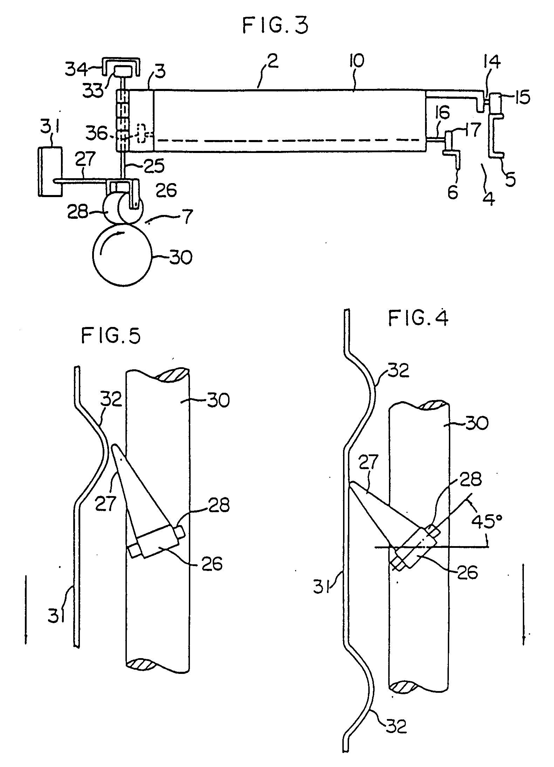

In this manner, the sorting trays 2 respectively supplied and loaded with the articles at the article supply station are moved along the horizontal closed track 4 at both high and low speeds. That is, the driving wheel 28 is driven at the high speed, because the greatest axial motion component is transmitted from the driving shaft 30 when the driving wheel 28 placed on the driving shaft 30 in parallel with the running direction of the conveyor 1 forms the maximum angle of substantially 45° relative to the driving shaft 30 as shown in Fig. 4. On the other hand, when the angle between the driving wheel 28 and the driving shaft 30 is reduced, for example when the angle is reduced to nearly an angle of 0° as shown in Fig.5, the smallest axial motion component is transmitted and therefore the driving wheel 28 is driven at the low speed. Such a change from high to low speeds is carried out by the bracket 26 of the driving wheel 28 being pivoted around the axis of the hinge shaft 25 by the speed change arm 27 when the speed change arm 27 is engaged with the protruding guide portion 32 of the speed change guide rail 31. Thus, when the speed change arm 27 is engaged with the guide portion 32 of the speed change guide rail 31 the speed of the driving wheel 28 is reduced to the slow speed, and after the speed change arm 27 has passed over the protruding guide portion 32 of the guide rail 31 the angle between the driving wheel 28 and the driving shaft 30 is returned to an angle of about 45° to change the speed of the driving wheel 28 back to the high speed.

In this way, the sort trays 2 are moved along the horizontal closed track 4, and when they arrive at a desired position the rotary solenoid 23 of the sorting operation device 8 is operated by an opening command from the control device to rotate the movable plate 20 to open up a space thereat, the supporting wheel 17 running along the support rail 6 thereby falling into this space, opening the front bottom plate 11 and at the same time the rear bottom plate 12 to allow the article to drop from the tray 2, thereby sorting the article into the desired sort receptacle A (Fig.1).

The empty trays 2 from which the articles have been discharged to the desired sorting receptacles for sorting them by the opening of the front and rear bottom plates 11 and 12, run along the horizontal closed track 4, and when they arrive at the closing device 9 provided adjacent to the terminal portion of the sorting positions, as shown in Fig. 6, the support wheel 36 of the rear bottom plate 12 for the sorting tray 2 first engages with the inclined closing guide 38 to raise and hold the bottom plate 12 in the closed position, and at the same time the supporting wheel 17 of the front bottom plate 11 engages successively with the closing guide 37 to also raise and close the bottom plate 11. At this time, the rear bottom plate 12 of the sorting tray 2 in the closed position is held by the front bottom plate 11, and thereafter the front supporting wheel 17 runs along the supporting rail 6 to hold both bottom plates 11 and 12 in the closed position. When the trays 2 thus advancing with both their bottom plates 11 and 12 held closed arrive at the article supply station the article is automatically or manually supplied into the tray 2 and the above mentioned sorting operation can be carried out again.

In this way, the automatic sorting conveyor system is continuously operated to pass the trays at high speed between the desired sorting positions and to pass the trays 2 at low speed through the sorting stations, so as to carry out the sorting of the articles at the sorting stations for example by the opening of the bottom plates 11 and 12 of the tray 2 with the sorting operating device 8, preferably with automatic closure the bottom plates 11 and 12 of the trays 2 by the closing device 9 after the accomplishment of the sorting to complete the preparation for the next sorting operation.

As mentioned above, the trays of the preferred sorting conveyor operated alternatively at high and low speeds can have their bottom plates opened at a desired sorting position at low speed to drop and discharge the article from the tray, so that the area for the installation of the sorting station can be reduced to half of the space needed for prior conveyors economizing on installation space and thereby the whole length of the sorting conveyor can be reduced to half the length of the prior conveyor, reducing the cost of equipment. Furthermore, the system is of simple construction and light weight, so that the required driving forces are less, and all of the construction including the preferred tray driving device and the sorting operation device can be made into a simple modular construction and thus a flexible and versatile arrangement and construction can be easily accomplished by the combination of the above to obtain an inexpensive installation appropriately used in the sorting of light, thin or soft articles or articles of indeterminate form, size and weight.

A suitable electronic controlling apparatus such as a conventional small computer can be used.

Where technical features mentioned in any claim herein are followed by reference symbols, those reference symbols are included solely for the purpose of increasing the intelligibility of the claims.

## Claims

1. An automatic sorting conveyor system characterised in that sorting trays (2) are driven to move on an endless path between alternative high and low speeds, the sorting trays (2) moving at the high speed between sorting stations for sorting articles and at the low speed while at the sorting stations.

2. The conveyor system as set forth in Claim 1, characterised in that the sorting trays (2) are adapted to open at the bottom and a wheel (15) supporting the bottom of each sorting tray (2) is adapted to run along a support rail (5), said support wheel (15) falling into a break in said support rail opened by a sorting operation device (8) when a given tray arrives at a desired sorting position thus opening the bottom of the sorting tray to carry out the sorting of the article.

3. The conveyor system as set forth in claim 1 or 2 characterised in that the sorting trays (2) are provided with driving wheels (28) supported on pivotable brackets (26) mounted to the trays, a rotary drive shaft (30) extends in parallel with the running direction of the trays and is engageable with the driving wheels for moving the trays, and means (27, 31, 32) are provided for pivoting said bracket and causing the driving wheels (28) and drive shaft (30) to move the trays (2) at different speeds.

4. The conveyor system as set forth in Claim 3 characterised in that the means for pivoting said brackets (26) comprises a speed changing arm (27) extending from each bracket and a speed change guide rail (31) having a number of protruding guide portions (32) spaced apart from each other and capable of engaging the arms (27) for pivoting the brackets (26).

5. A conveyor system as claimed in any preceding claim characterised in that the sorting trays (2) are connected to form an endless conveyor (1) moved along a horizontal closed track, each sorting tray (2) having bottom plates (11, 12) pivotably supported along front and rear edges of main frame bodies thereof and adapted to close and open at a central portion of the bottom and sorting operation devices (8) for opening the bottoms of the sorting trays at desired sorting positions and closing means (17, 37, 36, 38) for closing the opened bottoms (11, 12) of the sorting trays (2) are disposed at appropriate positions along said track.

6. The conveyor system as set forth in Claim 5 characterised in that said trays (2) are connected end to end by hinges (3).

7. The conveyor system as set forth in Claims 5 or 6 characterised in that each of said tray bodies is provided with a running wheel (15) which in use is supported by a running rail (5) of said track, a supporting wheel (17) being mounted on one of said bottom plates and adapted to run along a supporting rail (6) of said track, the one bottom plate (11) being adapted to support the other bottom plate (12) in the closed condition.

8. The conveyor system as set forth in Claim 7 characterised in that another supporting wheel (36) is mounted on the other of said bottom plates, the supporting wheels (17, 36) being engageable with closing means (37, 38) which include a closing guide (37) for the front bottom plate (11), and closing guide (38) for the rear bottom plate (12).

9. The conveyor system as set forth in Claim 2 or any of Claims 5-8 characterised in that said sorting operation device (8) includes a part (20) of the support rail (6) which is movable to open and close a gap in the support rail (6).

10. The conveyor as set forth in Claim 9 characterised in that the movable part (20) of the support rail (6) is pivotably mounted in the remainder of the support rail by a hinge shaft (22) connected to a rotary solenoid (23) for opening and closing said gap.

## Patentansprüche

1. Automatisches Sortier- und Fördersystem, dadurch gekennzeichnet, daß Sortierkästen (2) zur Fortbewegung auf einer endlosen Bahn mit abwechselnd hohen und niedrigen Geschwindigkeiten angetrieben werden, wobei sich die Sortierkästen (2) zwischen den Sortierstationen mit hoher Geschwindigkeit, und in den Sortierstationen mit niedriger Geschwindigkeit bewegen.

2. Fördersystem nach Anspruch 1, dadurch gekennzeichnet, daß die Sortierkästen (2) für das Öffnen an der Bodenseite ausgelegt sind und ein Rad (15) zum Tragen des Bodens jedes Sortierkastens (2) für das Laufen entlang einer Tragschiene (5) angebracht, wobei das Tragrad (15) in eine Lücke der Tragschiene fällt, die durch eine Sortieroperationseinrichtung (8) geöffnet wird, wenn ein gegebener Kasten eine gewünschte Sortierposition erreicht, so daß der Boden des Sortierkastens zum Sortieren der Artikel geöffnet wird.

3. Fördersystem nach Anspruch 1 oder 2, dadurch gekennzeichnet, daß die Sortierkästen (2) mit Antriebsrädern (28) versehen sind, die von drehbaren, an den Kästen montierten Bügeln (26) gehalten werden, wobei sich eine Antriebswelle (30) parallel zur Laufrichtung der Kästen erstreckt und zum Fortbewegen der Kästen in Kupplungsverbindung mit den Antriebsrädern gebracht werden kann; und daß Einrichtungen (27, 31, 32) zum Drehen des Bügels und Verstellen der Antriebsräder (28) und der Antriebswelle (30) in der Weise vorgesehen sind, daß sich die Kästen (2) mit unterschiedlichen Geschwindigkeiten fortbewegen.

4. Fördersystem nach Anspruch 3, dadurch gekennzeichnet, daß die Einrichtungen zum Drehen der Bügel (36) einen Geschwindigkeitsänderungsarm (27), der von jedem Bügel absteht, und eine Geschwindigkeitsänderungsführungsschine (31) aufweisen, die eine Anzahl von untereinander auf Abstand stehende vorspringende Führungsabschnitte (32) besitzt, die zum Drehen der Bügel an den Armen (27) angreifen können.

5. Fördersystem nach einem beliebigen vorhergehenden Anspruch, dadurch gekennzeichnet, daß die Sortierkästen (2) unter Bildung eines Endlosförderers (1) miteinander verbunden sind, der sich entlang eines waagerechten geschlossenen Gleises bewegt, wobei jeder Sortierkasten (2) Bodenplatten (11, 12), die schwenkbar entlang der Vorder- und der Hinterkante der Hauptrahmenkörper des Kastens gelagert und zum Schließen und Öffnen in einem zentralen Abschnitt des Bodens ausgebildet sind, und ferner Sortierbetriebseinrichtungen (8) zum Öffnen der Böden der Sortierkästen in gewünschten Sortierpositionen aufweist, und wobei Schließeinrichtungen (17, 37, 36, 38) zum Schließen der geöffneten Böden (11, 12) der Sortierkästen (2) in geeigneten Positionen entlang des Gleises angeordnet sind.

6. Fördersystem nach Anspruch 5, dadurch gekennzeichnet, daß die Kästen (2) hintereinander durch Scharniere (3) verbunden sind.

7. Fördersystem nach Anspruch 5 oder 6, dadurch gekennzeichnet, daß jeder Kastenkörper mit einem Laufrad (15) versehen ist, das im Betrieb von einer Laufschiene (5) des Gleises getragen wird, wobei ein Tragrad (17) an einer der Bodenplatten befestigt und für das Laufen entlang einer Tragschiene (6) des Gleises ausgebildet ist, und wobei die eine Bodenplatte (11) zum Tragen der anderen Bodenplatte (12) in der Schließstellung ausgebildet ist.

8. Fördersystem nach Anspruch 7, dadurch gekennzeichnet, daß ein anderes Tragrad (36) an der anderen Bodenplatte befestigt ist, wobei die Tragräder (17, 36) an den Schließeinrichtungen (37, 38) angreifen können, die eine Schließführung (37) für die vordere Bodenplatte (11) und eine Schließführung (38) für die hintere Bodenplatte (12) aufweisen.

9. Fördersystem nach Anspruch 2, oder nach einem beliebigen Anspruch 5 bis 8, dadurch gekennzeichnet, daß die Sortieroperationseinrichtung (8) einen Abschnitt (20) der Tragschiene (6) umfaßt, der zum Öffnen und Schließen einer Lücke in der Tragschiene (6) bewegt werden kann.

10. Fördersystem nach Anspruch 9, dadurch gekennzeichnet, daß der bewegliche Abschnitt (20) der Tragschiene (6) schwenkbar am restlichen Teil der Tragschiene durch eine Scharnierwelle (22) befestigt ist, die an ein drehbares Solenoid (23) zum Öffnen und Schließen der Lücke angeschlossen ist.

## Revendications

1. Système de transporteur à triage automatique,
caractérisé en ce que des plateaux de triage (2) sont entraînés à se déplacer sur une voie sans fin entre des vitesses alternatives élevée et faible, les plateaux de triage (2) se déplaçant à vitesse élevée entre les postes de triage pour le triage d'articles, et à faible vitesse aux postes de triage.

2. Système de transporteur selon la revendication 1,
caractérisé en ce que les plateaux de triage (2) sont adaptés pour s'ouvrir au fond et une roue (15) supportant le fond de chaque plateau de triage (2) est agencée pour rouler le long d'un rail de support (5), ladite roue de support (15) tombant dans une cassure dans ledit rail de support, ouvert par un dispositif de mise en oeuvre du triage (8) quand un plateau donné arrive à une position de triage souhaitée, ouvrant ainsi le fond du plateau de triage pour procéder au triage de l'article.

3. Système de transporteur selon l'une des revendications 1 ou 2,
caractérisé en ce que les plateaux de triage (2) sont munis de roues d'entraînement (28) supportés par des pattes pivotantes (26) montées sur les plateaux, un arbre d'entraînement en rotation (30) s'étend en parallèle avec la direction de déplacement des plateaux et est engageable avec les roues d'entraînement pour déplacer les plateaux, et des moyens (27,31,32) sont prévus pour pivoter lesdites pattes et entraîner les roues d'entraînement (28) et l'arbre d'entraînement (30) à déplacer les plateaux (2) aux différentes vitesses.

4. Système de transporteur selon la revendication 3,
caractérisé en ce que les moyens pour pivoter lesdites pattes (26) comprennent un bras de changement de vitesse (27) s'étendant à partir de chaque patte et un rail de guidage de changement de vitesse (31) ayant une pluralité de parties de guidage en saillie (32) espacées les unes des autres et capables d'engager les bras (27) pour pivoter les pattes (26).

5. Système de transporteur selon l'une des revendications précédentes,
caractérisé en ce que les plateaux de triage (2) sont reliés entre eux pour former un transporteur sans fin (1) déplacé le long d'une voie fermée horizontale, chaque plateau de triage (2) ayant des plaques de fond (11,12) supportées, de façon pivotante, le long des bords avant et arrière des corps principaux de celui-ci et agencé pour fermer et ouvrir la partie centrale du fond, et des dispositifs de mise en oeuvre du triage (8), pour l'ouverture des fonds des plateaux de triage à des positions de triage souhaitées, et des moyens de fermeture (17,37,36,38) pour fermer les fonds ouverts (11,12) des plateaux de triage sont disposés à des positions appropriés le long de ladite voie.

6. Système de transporteur selon la revendication 5,
caractérisé en ce que lesdits plateaux (2) sont reliés bout à bout par des articulations (3).

7. Système de transporteur selon les revendications 5 ou 6,
caractérisé en ce que chacun desdits corps de plateau est muni d'une roue de roulement (15) qui, en utilisation, est supportée par un rail de roulement (5) de ladite voie, une roue de support (17) étant montée sur l'une desdites plaques de fond et adaptée pour rouler le long d'un rail de support (6) de ladite voie, la plaque de fond (11) étant adaptée pour supporter l'autre plaque de fond dans la condition fermée.

8. Système de transporteur selon la revendications 7,
caractérisé en ce qu'une autre roue de support (36) est montée sur l'autre desdites plaques de fond, les roues de support (17,36) étant engageables avec les moyens de fermeture (37,38) qui comportent un guide de fermeture (37) pour la plaque de fond avant (11),et un guide de fermeture (38) pour la plaque de fond arrière (12).

9. Système de transporteur selon la revendication 2 ou l'une des revendications 5 à 8,
caractérisé en ce que le dispositif de mise en oeuvre du triage (8) comporte une partie (20) du rail de support (6) qui est déplaçable pour ouvrir et fermer un espace dans le rail de support (6).

10. Système de transporteur selon la revendication 9,
caractérisé en ce que la partie mobile (20) du rail de support (6) est montée, de façon pivotante, sur le reste du rail de support par un arbre d'articulation (22) relié à un solénoïde rotatif (23) pour l'ouverture et la fermeture dudit espace.
